Europäisches Patentamt

European Patent Office

Office européen des brevets

(19)

(11) Publication number: 0 331 521
A2

# EUROPEAN PATENT APPLICATION

(12)

(21) Application number: 89302165.9

(22) Date of filing: 03.03.89

(51) Int. Cl.⁴: **C 08 L 33/20**
C 08 J 3/20, C 08 J 3/00

(30) Priority: 04.03.88 US 164450

(43) Date of publication of application:
06.09.89 Bulletin 89/36

(84) Designated Contracting States:
AT BE CH DE ES FR GB GR IT LI LU NL SE

(71) Applicant: KINGSTON TECHNOLOGIES LIMITED
PARTNERSHIP
2235-B Route 130
Dayton New Jersey 08810 (US)

(72) Inventor: Stoy, Vladimir A.
8 Robert Road
Princeton New Jersey 08540 (US)

Lovy, Jan
1407 Bradley Court
Princeton New Jersey 08540 (US)

Tong, Shiu Bor
60 Tambrook Drive Scarborough
Ontario Canada MlW 3L9 (CA)

(74) Representative: Seaborn, George Stephen et al
c/o Edward Evans & Co. Chancery House 53-64 Chancery
Lane
London WC2A 1SD (GB)

(54) Novel polyacrylonitrile compositions and method for producing same.

(57) A composite polymeric composition comprising a polyacrylonitrile (PAN) polymer matrix first component, wherein the PAN polymer contains at least about 50% acrylonitrile units and preferably at least 80% acrylonitrile units, and a substantially water-insoluble second component penetrating the PAN matrix, which second component is incapable of dissolving the PAN matrix; said composite polymeric material being the product of dissolving the PAN polymer in a water-miscible solvent which is capable of dissolving the PAN polymer but incapable of reacting chemically with the PAN polymer under the dissolution conditions, then coagulating the PAN polymer from the solution by adding a coagulating fluid (e.g., water) to thereby obtain coagulated PAN matrix (e.g., PAN aquagel), then displacing the coagulating fluid in the PAN matrix first component with the water-insoluble second component by means of treating the coagulated PAN matrix with a series of decreasingly polar liquids, each liquid in the series miscible with the previous more polar liquid, thereby finally obtaining the PAN matrix first component with the water-insoluble second component dispersed therein.

Description

# NOVEL POLYACRYLONITRILE COMPOSITIONS AND METHOD FOR PRODUCING SAME

## I. FIELD OF THE INVENTION

This invention pertains to novel polyacrylonitrile compositions and methods for preparing the novel compositions. More particularly, disclosed herein are composite polymeric compositions comprising a polyacrylonitrile polymer matrix component having the morphology that results from coagulating polyacrylonitrile polymer molecules from solution and a water-insoluble second component which is interpenetrateded in the polyacrylonitrile matrix.

## II. BACKGROUND OF THE INVENTION

The novel composite polymer compositions of the present invention are produced by a process disclosed herein which utilizes the unique physical characteristics of the coagulated (e.g. aquagel) state of polyacrylonitrile (PAN) polymer molecules.

Polyacrylonitrile (PAN) polymers can occur in various physical states; e.g.,

  1) crystalline solid-phase PAN;

  2) dissolved or plasticized-gel-state PAN (the crystalline phase has been broken down by the solvation of nitrile groups in a solvent of PAN); and,

  3) coagulated solid-phase PAN (a metastable gel formed by coagulation from solution, e.g., by coagulating dissolved PAN out of a water-miscible PAN solvent by adding water to form what is also known as a PAN aquagel).

Although chemically the same substance, the various physical states of PAN polymer have different characteristics, and it is the physical characteristics of polymers which determine their utility and industrial value.

Solid state (crystalline) PAN polymers are very rigid plastics. In a non-oriented state, PAN is rather brittle, and therefore it is currently used only in thin, oriented articles, such as fibers or membranes. The crystalline form of pure PAN polymer or PAN copolymers containing more than 80% acrylonitrile units has found use as an extremely durable fiber ("Orlon") due to the fact that the structure of such PAN polymer in the solid state is fully crystalline. An amorphous phase, which usually coexists with the crystalline phase in other polymers, is absent. Thus, crystalline solid state PAN polymer is an excellent barrier to the diffusion of low molecular weight compounds, due to its very high crystallinity and the absence of an amorphous phase, nearly all the strongly dipolar nitrile groups of PAN being incorporated in the crystalline matrix. Accordingly, crystalline solid state PAN is very reluctant to engage in a chemical reaction unless it is in the presence of a PAN solvent. (See, Bohn, C.R., et al., J. Polymer Sci. 55. 531 (1961) for a detailed description of the structural features of PAN polymer in the crystalline solid state.

As a consequence of the highly polar nature of PAN, PAN is soluble in highly polar solvents. These highly polar PAN solvents are all water-miscible, which limits their practical use as plasticizers of PAN. The lack of water-immiscible plasticizers of PAN has sharply limited the utility of PAN polymer which is an otherwise excellent plastic. For example, polyvinylchloride (PVC) is similar to PAN in cost of raw materials, but is inferior to PAN in strength, density and stability. However, because PVC can be plasticized, and also processed in a plasticized state, its use is presently much broader than that of PAN.

From the fiber spinning arts, it is known that PAN polymers dissolved in one of its water-miscible solvents can be coagulated from solution by contact with water to form pliable PAN aquagel. Aquagel (or coagel) formation is, in fact, formation of a PAN gel matrix having water suspended or interpenetrated in the soft mass of PAN polymer molecules, caused by the exchange of a "good" PAN sovent, i.e., a solvent having a Flory-Huggins X Factor $< 0.5$ and incapable of fully solvating PAN chains, for a "poor" PAN solvent, i.e., a solvent having a Flory-Huggins X factor $> 0.5$ and incapable of fully solvating the PAN chains (e.g., mixtures of the good solvents with water).

Good PAN solvents include several inorganic compounds in concentrated aqueous solution, including calcium thiocyanate, sodium thiocyanate, zinc chloride, lithium bromide, magnesium perchlorate, phosphoric acid and nitric acid. Also, several organic compounds in substantially anhydrous solutions are good PAN solvents, including dimethysulfoxide (DMSO), dimethylformamide (DMF), gamma-butyrolactone, tetramethylenesulfone and dimethylacetamide. Alternatively, other water-miscible fluids, such as low aliphatic alcohols containing one to four carbon atoms per molecule, and the like, which are incapable of dissolving PAN can be used to coagulate PAN. Herein, the term "fluid" means either a liquid or a gas.

There are substantial differences in the properties of wet coagulated solid-phase PAN from the properties of solid crystalline PAN. Coagulated PAN formed by using water as a coagulating fluid, referred to as PAN aquagel, is a metastable coagel resembling a PAN hydrogel. However, unlike a true PAN hydrogel, PAN aquagel is not PAN polymer swollen to equilibrium. Rather, a decrease in the liquid content of PAN aquagel is irreversible, resulting in a dried, brittle PAN solid which does not reabsorb water.

The aquagel state of PAN can be discerned from plain porous dried PAN by immersing a sample into an aqueous solution of a dyestuff such as methylene blue. Aquagel is rapidly stained and the hue remains intact when the sample is dried. The coloration cannot then be removed by washing in cold water. By contrast, plain porous dried PAN does not become stained, and any dyestuff, caught perhaps at the surface, can be easily washed off in cold water.

A PAN article prepared by coagulation with subsequent drying has the same polymer properties, including Tg, crystallographic structure, thermodynamic properties, etc., as the article made by solvent evaporation, e.g. solvent cast membrane or dry-spun fiber. Both articles are non-melting, non-swellable in water, and orientable by stretching at high temperatures. In each case, PAN acts as an excellent barrier to diffusion of low-molecular weight solutes, because it is only soluble in a few highly polar solvents and is laterally organized in the oriented state.

Wet coagulated (aquagel) PAN can be considered plasticized PAN, although temporarily. This plasticity has been used advantageously in the fiber arts, where the PAn aquagel state is utilized for wet fiber spinning, stretching and dying prior to drying.

PAN coagel formation is a complicated physical process involving diffusion of water or another coagulant into a solution of PAN polymer molecules, and diffusion of the PAN solvent out of the solution. As the solvent's thermodynamic ability to hold PAN in solution deteriorates, due to the increasing water content, PAN polymer molecules coagulate to form a colloidal gel, or PAN coagulate having water dispersed therein. The forming PAN coagulate hinders the diffusion of all permeants. Because water permeates into the coagulating polymer faster than the solvent diffuses out, the result is a heterogeneous, porous or microporous gel structure formed by a matrix of PAN polymer molecules with voids or pores filled with water. Because the difference between the diffusion rates of water and the solvent increases with increasing length of the diffusion path, a skin is formed on the surface of the coagulated article which is usually less heterogeneous and porous than the interior "bulk" of the coagulated article. This skin formation is used in the production of PAN membranes with asymmetric structures in which the porous bulk provides high flow rates which the denser skin provides for separation of permeants by their diffusion rates, or by the sizes of their molecules in solution which is related to their diffusion coefficients.

Processes for producing semi-permeable PAN membranes are described in U.S. Patent Nos. 4,272,378, 4,147,745, 4,265,959, 4,107,049, 3,975,478, 4,268,662 and 4,265,959. The coagulated PAN polymers described in these membrane-related patents were thought of as any other porous articles and these investigators never contemplated or attempted to explain the structure and character of the solid-phase PAN product in these structures. The differences in permeabilities and flow rates were explained in terms of water-filled pores of varying size distribution. There is nothing in the aforesaid patents which either teaches or suggests that the structure and properties of wet coagulated PAN would differ from the structure and properties of PAN in a dried article, such as an acrylic fiber, or a dry membrane cast without coagulation, for instance by evaporation of the PAN solvent.

Where the coagulation process has been used in fiber-spinning to prepare fibers without macroscopic pores, the coagulated PAN product has been referred to as an "Aquagel". Aquagels are descibed as made from solutions of polymers or copolymers of acrylonitrile containing at least 85% of acrylonitrile units, in aqueous concentrated solutions of certain salts, such as zinc chloride or sodium thiocyanate. If such solutions are spun into ice-cold water at temperatures not exceeding about 2°C, the obtained "aquagel" filament can be easily drawn in hot water, forming a good, strong acrylic fiber. See, for example, U.S. Patent Nos. 2,558,730 to 2,558,735 issued to Cresswell, et al. Under these conditions, a gelled fiber without macroscopic pores is formed. This fiber contains a certain amount of water, and can be easily stretched in hot water prior to drying. Stanton, et al. in U.S. Patent No. 2,790,700 describes a process in which the fiber's heterogenicity is suppressed by coagulation in a dilute PAN solvent. In Stanton, et al's methods, the solvent gradient is lowered slowing down the rate of coagulation so that osmotic pore formation is suppressed.

Cummings, Jr. in U.S. Patent No. 4,948,581 describes a similar fiber coagulation process using thiocyanate instead of zinc chloride as the PAN solvent. It is believed that the gelled state and easy stretching reported by Cummings, Jr. is due to residual thiocyanate solvent in the gelled fiber which plasticizes the polymer to a limited extent. After stretching, the fiber is washed to remove the residual thiocyanate solvent. Likewise, U.S. Patent No. 3,689,621 issued to Fuji, et al. describes the process of coagulation of PAN to an aquagel from a zinc chloride solution. The process is modified by combined cold and hot stretching in the aquagel and dried states.

Fujisaki, et al. in U.S. Patent Nos. 3,073,669 and 3,080,209 describe the process of dissolving PAN in concentrated nitric acid and the coagulation of PAN fibers in dilute nitric acid solution. The process includes the steps of wet fiber spinning and fiber stretching prior to drying. Also, U.S. Patent No. 3,080,209 includes the addition of univalent cations to the coagulation bath to improve the dyeability of PAN fibres when using basic dyestuffs. The diffusion of water-soluble compounds such as dyestuffs into the PAN is much higher before drying than after the PAN aquagel has been dried.

In addition, coagulation of PAN can also be achieved by non-aqueous fluids which are miscible with water, such as lower aliphatic alcohols or glycols, which may be subsequently replaced with water. See, C.W. Saltonstall, et al.: Research and Development of New Polymer System for Reverse Osmosis Membranes; R&D Progress Report #167, Department of Interior (February 1966) and Ibid. R&D Progress Report #220 (November 1966).

The structure and properties of the aquagel state have not been extensively studied or disclosed although it has practical utility, as demonstrated above. At the time the Fujisaki, et al patents were published, the accepted explanation for the properties of PAN aquagel was that the aquagel state is simply a metastable state in which there are very small water-filled voids in the PAN structure which irreversibly collapse during drying. However, as is more fully discussed below, Applicants believe that the aquagel state of PAN is a distinct state of polymer which is neither swollen polymer nor simply microporous polymer with pores filled with the liquid phase.

The references discussed above emphasized that very specific and narrow coagulation conditions are necessary to obtain PAN in the aquagel state. These references also teach that coagulation of PAN under conditions outside those very narrow limits results in porous PAN. However, contrary to these accepted teachings in the art, Applicants have found that the aquagel state of PAN is not only formed in the narrow range of conditions previously believed necessary, but rather over a very broad range of conditions which exist during the replacement of any PAN solvent by water. Furthermore, the degree of porosity observed under various coagulation conditions does not appear to be directly related to presence or absence of the aquagel state.

The inventors have also discovered that the water trapped in the PAN aquagel matrix, which maintains the matrix structure, can be replaced by water-insoluble substances which also are able to maintain the matrix structure. The water is gradually replaced in a stepwise manner by decreasingly polar liquids, each of which is miscible with the previous more-polar liquid. Surprisingly, the inventors found that the new composite PAN matrix retains to some extent the original plasticity or flexibility of the coagulated PAN aquagel and, if not too macroporous, is stretchable. The novel composite PAN polymers which can be formed by this method are diverse, and their stability and varying physical characteristics open up a broad range of new uses for PAN polymers.

One important indication that aquagel-state PAN is not merely simple microporous PAN, as was previously throught, is the plasticizing effect observed by Applicants with non-polar, water-immiscible liquids such as hexane, toluene, silicone oil, poly (propylenoxide) and mineral oil, chlorinated hydrocarbons, organic phthalates and phosphates, as well as with polar, water-miscible liquids, such as dimethylsulfoxide, dimethylformamide, gamma-butyrolactone, tetramethylene, sulfone, dimethylacetamide, glycerol and 1,2-propylene glycol, and many others. This indicates that PAN aquagel is a peculiar state of the PAN polymer which is neither swollen, nor simply microporous with the pores filled with a liquid phase. If PAN aquagel were simply microporous PAN and if PAN aquagel were swollen, then the swelling should be dependent on thermodynamic parameters of the liquid, such as solubility parameters or cohesion energy. This is clearly not the case; rather, PAN aquagel retains its volume irrespective of the character of the liquid. Also, if PAN aquagels were porous structures, then there would be no plasticizing effect by the liquid, which are all poor solvents of PAN with a Flory-Huggins X factor $> 0.5$. Finally, if aquagels were a porous structure with very small pores filled with liquids, they would have a large wetting angle making them thermodynamically unstable, which is not the case.

Contrary to accepted teachings in the art, Applicants have found that plasticized PAN composites made with both water-miscible and water-immiscible liquids are stable and stay plasticized over very long periods of time without any change in their properties. These PAN composites retain their stability as long as the liquid is not removed, e.g., by evaporation. The plasticizing effects of water-immiscible liquids on polyacrylonitrile having the structure acquired in the aquagel state are very surprising and cannot be satisfactorily explained by the current theoretical concepts of polymer swelling, or of porous, glassy polymers.

Brief Summary of the Invention

Disclosed herein are composite polymeric compositions comprising a polyacrylonitrile (PAN) polymer matrix first component, wherein the PAN polymer contains at least about 50% acrylonitrile units, and preferably at least 80% acrylonitrile units, and a substantially water-insoluble second component penetrating the PAN matrix, which second component is incapable of dissolving the PAN matrix; said composite polymeric material being the product of dissolving the PAN polymer in a water-miscible solvent which is capable of dissolving the PAN polymer but incapable of reacting chemically with the PAN polymer under the dissolution conditions, then coagulating the PAN polymer from the solution by adding a coagulated fluid to thereby obtain coagulated PAN matrix, then displacing the coagulating fluid in the PAN matrix first component with the water-insoluble second component by means of treating the coagulated PAN matrix with a series of decreasingly polar liquids, each liquid in the series miscible with the previous more polar liquid, thereby finally obtaining the PAN matrix first component with the water-insoluble second component dispersed therein.

In preferred embodiments, the water-insoluble second component includes a water-immiscible, non-polar, organic liquid capable of plasticizing the matrix; a disinfectant, pesticide, feromone, human or animal hormone, perfume, fungicide, drug, or mixtures thereof; or a dye. The water-insoluble second component can also include a polymer, which is preferably cross-linked or water-swellable.

The polyacrylonitrile matrix is preferably biaxially or monoaxially oriented and forms between 10% and 90%, more preferably between 20% and 60%, by volume of the composite polymer composition. The composite composition may include a surface layer whose chemical composition differs from that of the polyacrylonitrile matrix.

Further disclosed herein as a method for preparing such composite polymer compositions comprising:

(a) dissolving a polyacrylonitrile (PAN) polymer in a water-miscible solvent, wherein the PAN polymer contains about at least 50% acrylonitrile units and preferably 80% acrylonitrile units, and wherein the water-miscible solvent is incapable of reacting chemically with the PAN polymer under the dissolution conditions;

(b) coagulating PAN polymer from the solution obtained in step (a) by adding a coagulating fluid (e.g., water), thereby obtaining coagulated PAN polymer matrix (e.g., aquagel) with dispersed coagulating fluid therein; and,

(c) displacing the coagulating fluid in the coagulated PAN matrix obtained in step (b) with a water-insoluble component by means of treating the coagulated PAN matrix obtained in step (b) with a series of less polar liquids, wherein each liquid in the series is miscible with the previous more polar liquid, thereby finally obtaining a PAN matrix with a water-insoluble component interpenetrated therein.

Water-insoluble substances dissolved in an organic solvent can be interpenetrated in the PAN matrix by treating the matrix according to the methods disclosed herein and then entrapped by partially evaporating the solvent such that the morphology of the matrix collapses to an extent sufficient to entrap the substance. Entrapment can also be achieved by dissolving the water-insoluble substance in a mixture of first and second organic solvents, whereby the boiling point of the first solvent is higher than that of the second solvent, and then selectively evaporating the second solvent to cause matrix collapse.

Interpenetrating polymer networks can be prepared by the methods disclosed herein by introducing into the coagulated PAN matrix a monomer composition capable of polymerizing to form a substantially water-insoluble polymer and then polymerizing the monomer composition to form the interpenetrating polymer network.

The monomer composition could include one or more monomers which can be polymerized by step growth or chain growth polymerization. The polymer can be a homopolymer or copolymer, and can also be crosslinked by, e.g., irradiation. The monomer composition can also polymerize directly to a crosslinked polymer, e.g., when at least one of the monomers has a functionality greater than 2.

Detailed Description of the Invention

The inventors have found that the trapped water which maintains the coagulated-state aquagel of polyacrylonitrile, or copolymers thereof containing at least about 50% of acrylonitrile units and preferably at least 80% acrylonitrile units, can be replaced by water-insoluble substances so as to form a coherent or non-coherent phase within the coagulated polyacrylonitrile matrix and which maintain the coagulated-state matrix. The water is stepwise or gradually replaced by decreasingly less polar liquids, each of which is miscible with the previous more-polar liquid. So, for example, water can first be replaced by methanol, ethanol, or acetone, which, in turn, can be replaced by, e.g., chloroform or another halogenated hydro-carbon, and the latter can be replaced by, e.g., mineral oil, an ethereal oil, a molten mixture of a dyestuff with a high-boiling water-immiscible liquid capable of dissolving the dyestuff but incapable of dissolving PAN, or a monomer which can be subsequently polymerized and, if desired, cross-linked, forming an interpenetrating network within the polyacrylonitrile matrix. Surprisingly, the treated PAN matrix retains to some extent the original flexibility of the coagulated PAN and, if not too macroporous, is stretchable at temperatures above the Tg (about 70°C), even if the water initially penetrating the coagulated PAN gel has been replaced by a hydrophobic liquid having lower affinity for PAN than water.

In practicing the methods disclosed herein, the replacement of water in the coagulated PAN matrix by, e.g., ethanol, as well as the replacement of ethanol or similar solvents by still less polar liquids, has to be carried out under such conditions that neither water nor the volatile alcohol can evaporate which would destroy the unique but metastable structure of PAN matrix acuqired during the original coagulation.

The methods disclosed herein can be used to produce many novel composite PAN compositions, such as, for example; lubricating rings (where the water-insoluble component is, e.g., mineral oil); oxygen-permeable transparent compositions of PAN with a silicone compound (prepared by replacing water in the aquagel by cyclic silicone monomers and, if desired, forming interpenetrating polymer networks by polymerizing and crosslinking the monomers in the usual manner to silicone rubber); compositions of PAN with entrapped feromones, perfumes, drugs, disinfectants and the like for controlled release; compositions of PAN with molten and solidified mixtures of dyestuffs and solvents. Also, membranes or parts of membranes can be produced by the processes disclosed herein consisting of a PAN matrix in the micropores of which is laid a coherent or non-coherent phase of a water-permeable polymer, or asymmetric membranes provided on one side with, e.g., a thin layer of water-permeable copolymer of acrylonitrile with ethylene sulfonic acid or its salt, respectively, whereas in the rest of the composite the pores are filled with water. Further examples include compositions for medical applications: aquagel tubes in which the polyacrylonitrile microporous matrix is interpenetrated by a biocompatible, water-insoluble hydrogel or rubber for arterial duct and vein prostheses, catheters and the like; implants containing drugs embedded in the PAN matrix for controlled drug release; and many other compositions where a strong PAN matrix is imbided or interpenetrated with water-insoluble substances. Further, compositions of polyacrylonitrile or acrylonitrile copolymers can be produced which are to a certain degree plasticized with the substances embedded in their micropores. These compositions can be molded or shaped to a certain degree depending upon the strength and other physical characteristics of the polyacrylonitrile matrix derived from the original aquagel. Maximum possibilities of molding are given when the composition, which has not been oriented, is heated above the Tg of the polymer or copolymer, e.g., above 70°C for pure PAN. This list of possible uses is by far not complete and is to be considered a set of examples only. Three broad applications - plasticizing, entrapment and interpenetrating polymer networks - are more fully disclosed below.

The term "polyacrylonitrile matrix" as used herein means the structure of polyacrylonitrile inside the aquagel that results from coagulating PAN from solution, said structure being substantially maintained during the processing of the aquagel in accordance with this invention. Exact details of this structure are not known. It is clear, however, that it is stable only when some liquid or solid substance separates the PAN polymer chains partially from each other. If such interstices between the polymer chains can be called "micropores", the PAN-matrix derived from the aquagel can be called "microporous", but there are still certain differences with respect to typical micropores that are not yet fully explained.

The term "polyacrylonitrile" as used herein means homopolymers of acrylonitrile and copolymers (random, block, and multiblock) having at least 50 mol. % acrylonitrile units, and preferably at least 80%.

· The term "water-insoluble component" as used herein means compounds and fluids having aqueous solubility less than 10% and preferably less than 1%. Further, water-insoluble does not mean exclusively hydrophobic substances, but also water-swellable or water-wettable materials such as polymers.

The inventors have found that not only clear, homogeneous aquagels known for fiber production have the above-described properties, but also heterogeneous and porous coagulates formed by coagulation of PAN dissolved in organic and inorganic solvents, such as DMSO, DMF, gamma-butyrolactone, cyclic ethylene carbonate, concentrated aqueous solutions of nitric acid, sodium or calcium thiocyanate, lithium bromide, magnesium perchlorate and similar solvents. It appears, therefore, that the coagulated-gel or "aquagel" structure of PAN is formed not only in the narrow range of conditions described hitherto, but quite generally during the replacement of any PAN solvent for water or a water-miscible polar solvent, e.g., methanol, during the coagulation process. Thus, as used herein the term "aquagel" refers broadly to porous PAN prepared by coagulating PAN from solution with water or water-miscible liquids that are incapable of dissolving PAN, and to the resulting compositions when the coagulation liquid is replaced by other PAN non-solvents.

Without intending to be bound by theory, Applicants believe that the aquagel state of PAN is a distinct state of polymer which is neither swollen polymer nor simply microporous polymer with pores filled with the liquid phase. If the aquagel were merely a swollen polymer, then the swelling should be dependent on thermodynamical parameters of the liquid, such as the solubility parameter or cohesion energy. This is clearly not so; the PAN aquagel retains its volume irrespective of the character of the liquid. If the aquagel were merely a porous structure, then no plasticizing effect should be observed by introduction of the water-immiscible liquids, which are all poor solvents of PAN with interaction parameters > 0.5. However, plasticizing effects on PAN matrices are observed with nonpolar, water-immiscible liquids such as hexane, toluene, silicone oil, polypropylene oxide, mineral oil, chlorinated hydrocarbons, organic phthalates and phosphates, and many others. Further, porous structures with very small pores filled with liquids with large wetting angles should be thermodynamically unstable, which is not the case here.

The inventors have found that coagulated PAN matrices with either water-miscible or water-immiscible liquids interpenetrated therein according to the processes disclosed therein are stable and stay plasticized for very long periods of time without any change in properties as long as the liquid has not been removed, e.g., by evaporation. The plasticizing effects of water-immiscible liquids on polyacrylonitrile having the structure acquired in the "aquagel" state is very surprising and cannot be satisfactorily explained by current theoretical concepts of polymer swelling or porous glassy polymers. The plasticized PAN compositions produced by the processes herein have practical use in many areas where flexibility is important, such as foils, tubings, catheters and the like. Some water-insoluble plasticizing components can improve special properties, such as high permeability for oxygen, while PAN delivers to the composite its particular properties, such as rigidity, crystallinity and capability of surface modifications such as hydrophilization by acids or hydroxides.

The composite PAN compositions of the present invention can form covenient entrapment systems for many active compounds. The selection of such compounds is limited only by their solubility, that is, they must be soluble in any organic solvent which is not a solvent of PAN.

Entrapment can be facilitated by partial collapse of matrix pores. A certain average pore size can be assigned to a particular liquid content in the aquagel matrix. If a portion of the liquid is evaporated, the pore size diminishes irreversibly. This can be conveniently achieved by using a liquid mixture of high-boiling and low-boiling aquagel components. If the latter component is evaporated, the aquagel structure changes to reflect the content of high-boiling component, which can later be exchanged, if needed, for still another component. This technique is useful for controlling porosity, pore size, and permeability. It can also be used for entrapment of large molecules by allowing them to penetrate into the large aquagel pores and then diminishing the pores by partial collapse of the matrix so that the entrapped component cannot escape.

Because entrapment is carried out by a simple physical process without any chemical reaction and at very mild ( usually ambient) conditions, the invention is suitable even for sensitive compounds which cannot be used with conventional reactive entrapment or encapsulation systems. For example, perfume oils can be entrapped in large concentrations (up to 90%, more typically 50% to 75%), without changing their properties during processing. Other entrapable components include drugs, hormones, pesticides, insect attractants (feromones) and the like.

The composite PAN compositions of the present invention also can be used for the production of valuable interpenetrating polymer networks, which are plastics with various special properties. The monomers and initiators can plasticize PAN in the aquagel state, as can any other low-molecular weight liquid. They form, in fact, reactive plasticizers which can be converted into polymers inside the PAN aquagel matrix without changing its essential properties. Two interpenetrating polymer phases are formed this way, each of them retaining fully its individual properties. For example, utilizing the processes disclosed herein, a water-swellable but insoluble polymer can be formed within the PAN aquagel matrix structure, the whole composite then forming water-swellable yet insoluble hydrogels with very high mechanical strength and stability. Hydrophilic monomers can be introduced into the PAN aquagel matrix structure advantageously together with a small portion of appropriate cross-linking comonomers so that the resulting polymer is water-insoluble.

Suitable monomers include 2-HEMA; acrylamide; N, N diethyl acrylamide; acrylic or methacrylic acid; and vinyl pyrrolidone. Monomers can be introduced either with corresponding crosslinking agents, or also with other modifying comonomers. Polymerization of the entrapped monomers, once inside the PAN aquagel matrix, can be carried out by known means. Thermal, radiation or chemical initiations are readily feasible.

### Example 1

A PAN aquagel filament was prepared by spinning a 1 mm thick filament of a solution of 15% PAN (m.w. 150,000) dissolved in a 60% aqueous solution of sodium thiocyanate into a water bath. The PAN solution was spun over a 3 cm wide air-gap into tap water (8°C). The aquagel PAN filament obtained was washed to remove all the salt, soaked in an excess of anhydrous methanol, and then, after a short centrifuging to remove the adhering methanol, soaked in chloroform and finally in a concentrated solution of a blue dyestuff and liquid dioctyl sebacate ( a known plasticizer). The water-free composite PAN filament, still 1 mm in diameter, was both plasticized and colored.

### Example 2

In the procedure of Example 1, the soaking in the blue dyestuff in liquid dioctyl sebacate was finished by drawing the filament to 450% of its spun length at 90°C. A substantially thinner and harder composite filament was obtained.

### Example 3

A PAN aquagel filament prepared according to Example 1 was soaked stepwise in 1)ethanol, 2) ethylene dichloride and 3)a saturated solution of nun-moth feromone in molten paraffin fraction (m.p. 50°C), with 30% of tetrahydronaphthalene added. The unstretched composite PAN filament obtained was flexible and could be cut into pieces for use as lures in nun-moth testing boxes for early warning.

### Example 4

A PAN aquagel ribbon was prepared from a solution of 12% polyacrylonitrile in 71% aqueous zinc chloride solution by coagulation in a 27% solution of zinc chloride cooled down to -15°C. The translucent, homogeneous PAN aquagel was washed thoroughly in water. The PAN aquagel was soaked in pure acetone until acetone replaced all the water. Acetone in the PAN aquagel was then exchanged for toluene, and them the latter for a liquid consisting of a slightly heated mixture (1:1:8) of the feromone of the mediterranean fruitfly, bi(p-dichlorphenyl) trichlormethyl ethan (DDT) and hexahydronaphthalene. The PAN composite composition can be used for the protection of orchards.

### Example 5

A PAN aquagel ribbon prepared according to the procedure of Example 4 was soaked in pure ethyl alcohol and then in a mixture of ethereal oils. The PAN composition was then briefly rinsed with ethyl alcohol and dried sufficiently to form a thin layer of polyacrylonitrile on the surface. The thin surface layer hindered the PAN matrix component from releasing the perfume too rapidly. The ribbon was then cut to regular quadratic flakes. If desired, the rinsing with alcohol and drying can be carried out after cutting the ribbon. In this way, any desired rate of releasing the vapors of ethereal oils can be achieved.

### Example 6

An interpenetrating polymer network was prepared in the following manner.

A solution of 10% PAN in a 58% aqueous sodium thiocyanate solution was filtered and degassed under reduced pressure and then spread by means of a blade on a clean glass plate. The plate with the layer of PAN solution was then put into a freezer to cool down to -5°C. The plate with the frozen layer of PAN solution was then immersed in cool water and washed in a slow stream to remove all thiocyanate. The PAN aquagel membrane thus obtained was then washed in three baths of anhydrous acetone. The anhydrous acetone in the PAN aquagel matrix was then exchanged for a liquid cyclic silicone monomer mixture with a silicone crosslinking agent, and this mixture was then polymerized by spraying a small amount of a 0.1% aqueous sodium hydroxide solution thereon. The interpenetrating polymer network thus obtained was clear and transparent. This composite interpenetrating polymer network was used for hot molding contact lenses. The lenses could be partially hydrolyzed on the surface by applying a spray of 65% hot (85°C) sulfuric acid and washing the acid off after 10-15 minutes. After neutralizing the lenses in 1% sodium hydrocarbonate aqueous solution, the lenses were stored in 0.9% sodium chloride solution. The surface of the lenses was hydrophilic and very smooth, soft and slippery. The lens was relatively rigid and highly permeable to oxygen.

Example 7

Water in the PAN aquagel membrane prepared according to Example 6 was replaced by acetone, and then the acetone was replaced by a filtered monomer mixture of hydroxyethyl methacrylate (99.4%) and ethylene glycol dimethacrylate (0.6%). The composite membrane thus obtained was then cold molded by UV-irradiation of polystyrene molds containing the PAN composite. Irradiation caused polymerization and crosslinking of the monomer mixture to form an interpenetrating polymer network.

Example 8

A 25% polyacrylonitrile solution in an aqueous 60% solution of sodium and calcium rhodanides (1:1) was extruded into water. The PAN aquagel ribbon obtained was washed in water and was then treated first with methanol, and then with toluene and finally with molten paraffin at 65°C. The composite composition was rigid at ambient temperatures and pliable at temperatures close to or above the melting temperature of the paraffin. The composition can be used, e.g., for catheters. The catheters thus prepared are rigid during insertion but pliable at body temperature.

Example 9

The PAN aquagel ribbon of Example 8, recovered from the washing step, was soaked in acetone to replace the aquagel water. The acetone was then replaced by a liquid mixture of xylene isomers; and the latter was then replaced by liquid tri-phenyl phosphate. The composite PAN product could be hot-pressed or hot-stretched at temperatures above 70°C to elastic shape-retaining articles. When the shaped composite article was eluated stepwise by xylenes, then acetone, and then water, a PAN aquagel article was obtained which retained the hot-molded shape.

Example 10

The products of the foregoing Examples were each provided with a thin layer of cellulose tri-acetate by dipping them for a short time in solutions of cellulose tri-acetate dissolved in methylene dichloride (conc. of cellulose triacetate = 1-10%) and then evaporating the solvent. The obtained skin consisted of a thin layer of polyacrylonitrile covered by a layer of cellulose triacetate, the thickness of which increased with increasing concentration of the cellulose triacetate solution. The two outer layers controlled the release of the water-insoluble material inside the PAN matrix.

Example 11

50 weight parts of acrylonitrile monomer was mixed with 50 weight parts of 10% nitric acid and 0.1 weight parts of a 5% aqueous solution of ammonia persulphate. The mixture was poured into glass tubular molds and heated to 40°C for 24 hours under a nitrogen blanket. The mixture polymerized into a turbid rubbery gel which was extracted from the molds and washed thoroughly in water.

The aquagel thus formed was placed in acetone until all the water in the aquagel was replaced by acetone, and then into an excess of a mixture of styrene (90 weight parts), acrylonitrile (10 weight parts) and cumyl hydroperoxide (0.25 weight parts) for 24 hours. The composition thus formed was compression molded at ambient temperature under a pressure of 7500 psi into the shape of a water pump propeller blade, and heated to 100°C for eight hours and then at 130°C for another six hours while still in the mold. The PAN-SAN (styrene-acrylonitrile copolymer) composite thus formed was then dipped for one minute into a mixture of 90% sulfuric acid and 10% polyethylene glycol at 90°C, and then washed in diluted sodium bicarbonate and in water. The resulting part was strong and tough, particularly in directions of maximum deformation during the molding when the PAN matrix was oriented. The blade was hydrophilic on the surface with a low coefficient of friction.

Example 12

25 weight parts of a copolymer of acrylonitrile with 10% of methylacrylate (MW 110,000) was dissolved in 75 weight parts of hot dimethylsulfoxide (DMSO).

The viscous solution was spread on a glass plate to form a layer about 4 mm thick and exposed to humid air (90% rel. humidity) at ambient temperature for two days. During that time, part of the DMSO "sweated out" as a separate liquid phase and the polymer plasticized by DMSO formed another phase. The polymer layer thus formed was washed in water to form a translucent, tough, aquagel sheet.

The aquagel sheet was placed in excess acetone until the water was replaced by acetone, and then it was immersed in dibutylphthalate in an open container. The container was heated to 50°C and all the acetone evaporated, while being simultaneously replaced by the dibutylphthalate. The composite polymer sheet was now plasticized with water-insoluble dibutylphthalate, and its volume was the same as the volume of the starting aquagel.

The plasticized polymer sheet was then immersed in water for two weeks without changing its properties.

The same sheet was immersed in hot water (80°C) for 24 hours, again without a change of properties or any indication of water replacing dibutylphthalate in the composite PAN sheet aquagel. After that, the same sheet was immersed again in excess acetone until all dibutylphthalate was extracted and replaced by acetone. The acetone-soaked PAN polymer sheet had the same volume as the original aquagel sheet.

The acetone-soaked sheet was then immersed in excess water in an open container and heated to 50°C until all the acetone evaporated. The sheet reverted back to the original water-soaked aquagel state, without any change of volume or other properties. The cycle was repeated several times without any observable change of aquagel properties.

The water-soaked aquagel was then immersed into excess dibutylphthalate in a closed container and left there for two weeks. There was no observable change in aquagel volume or properties or any indication that dibutylphthalate would partly replace water. After that, the aquagel sheet was dried in an oven at 60°C for several days. The plasticized aquagel sheet shrunk into a hard, brittle, distorted artifact. When immersed in water, acetone or dibutylphthalate for one month, it did not swell or become plasticized in any observable degree.

This example demonstrates the unique nature of the aquagel state by showing that the plasticizing effect of the interpenetrating liquid is independent of the swelling or wetting characteristics of the liquid, and thus, that PAN aquagel is neither a swollen polymer nor a microporous system with pores filled with liquid.

Example 13

10 weight parts of PAN (MW 175,000) was dissolved in 90 weight parts of dimethylformamide. The PAN solution was spread on a glass plate to a layer about 0.25 mm thick and coagulated immediately in cold water. After the solvent was washed out, the white, soft, obviously porous membrane was divided into several strips which were treated in the following ways:

(a) One strip was immersed in a solution of Methylene Blue for one hour, then dried. The dry polymer was a deep blue, porous brittle membrane. If re-immersed in water, the blue color did not wash off, and the membrane gained some weight corresponding to water which penetrated into the pores.

(b) A second strip was dried first to a yellowish, porous, brittle membrane. The dried membrane was immersed in a solution of Methylene Blue for one hour, and then rinsed in water. Almost all the blue color washed off easily and the membrane gained some weight as in the previous case.

(c) A third strip was soaked in acetone until all water was replaced, then in toluene, and finally in octadecanol. All liquids were replaced in the membrane without changing its dimensions, and the membrane stayed pliable. This example demonstrates that the aquagel state of PAN exists alongside the apparent porosity formed by osmosis; and the interaction of liquid with PAN in the aquagel state is of a different nature from that in ordinary porous PAN (as formed by drying porous PAN Membranes).

Example 14

This example demonstrates the preparation of a highly oxygen-permeable interpenetrating network consisting of a silicone copolymer interpenetrating the matrix structure of polyacrylonitrile acquired in the aquagel state.

Finely powdered polyacrylonitrile was dissolved in aqeuous sodium thiocyanate (55% by weight) as 90 degrees C. to form a 20% by weight polymer solution. 0.5 millimeter thick films were cast from this solution by coagulating in deionized water at room temperature. The films were washed in deionized water to remove the sodium thiocyanate and then equilibrated in acetone for at least one day.

The acetone-containing films were soaked in equilibrium for 20 hours in a comonomer mixture of 6.92 g of 3-methacryloxypropyltris(trimethylsiloxy)silane, 2.03 g of Dow Corning 200 fluid of viscosity 350 cs (as a plasticizer), 1.01 g of 4-t-butyl styrene, and 0.04 g of benzoin methyl ether. The films were then placed in a nitrogen atmosphere under a low-power UV lamp at a distance of about 7 inches from the lamp. UV-irradiation was applied for 16 hours. The film with the plasticized silicone copolymer was rigid, transparent, and highly permeable to oxygen. The oxygen permeability as measured on a Createch Model 201T Permeometer was 107.5 x $10^{-11}cm^2sec^{-1}ml(O_2)ml^{-1}mm^{-1}Hg$ at 22.4 degrees C.

Example 15

A highly oxygen-permeable material was made according to the procedure of Example 14 in which the acetone-containing films were soaked to equilibrium in a comonomer mixture comprising 5.89 g of a silicone monomer PS406, 3.06 g of Dow Corning 200 fluid (350 cs), 1.00 g of 4-t-butyl styrene, and 0.05 g of benzoin methyl ether. PS406 obtained from Petrarch Systems has the following structure:
$CH_2=C(CH_3)COOCH_2CH_2Si\{O[Si(CH_3)_2O]_nSi(CH_3)_3\}_3$
The resultant film was rigid, transparent, and had an oxygen permeability of
88.1 x $10^{-11}cm^2sec^{-1}ml(O_2)ml^{-1}mm^{-1}Hg$ at 22.4 degrees C.

The embodiments provided herein are not intended to limit the scope of the following claims. While the invention has been described with reference to the specific methods and compositions recited in the description and examples, it will be appreciated by those of ordinary skill in the art that various modifications can be made to the methods and compositions of this invention without departing from its spirit and scope.

Claims

1. A composite polymeric composition comprising a polyacrylonitrile (PAN) polymer matrix first component, wherein the PAN polymer contains at least about 80% acrylonitrile units, and a substantially water-insoluble second component penetrating the PAN matrix, which second component is incapable of dissolving the PAN matrix; said composite polymeric material being the product of dissolving the PAN polymer in a water-miscible solvent which is capable of dissolving the PAN polymer but incapable of reacting chemically with the PAN polymer under the dissolution conditions, then coagulating the PAN polymer from the solution by adding a coagulating fluid to thereby obtain coagulated PAN matrix, then displacing the coagulating fluid in the PAN matrix first component with the water-insoluble second component by means of treating the coagulated PAN matrix with a series of decreasingly polar liquids, each liquid in the series miscible with the previous more polar liquid, thereby finally obtaining the PAN matrix first component with the water-insoluble second component interpenetrated therein.

2. A composite polymeric composition comprising a polyacrylonitrile (PAN) polymer matrix first component, wherein the PAN polymer contains at least about 80% acrylonitrile units, and a substantially water-insoluble second component penetrating the PAN matrix, which second component is incapable of dissolving the PAN matrix; said composite polymeric material being the product of dissolving the PAN polymer in a water-miscible solvent which is capable of dissolving the PAN polymer but incapable of reacting chemically with the PAN polymer under the dissolution conditions, then coagulating the PAN polymer from the solution by adding water to thereby obtain PAN aquagel, then displacing the water in the PAN aquagel matrix with the water-insoluble second component by means of treating the PAN aquagel with a series of decreasingly polar liquids, each liquid in the series miscible with the previous more polar liquid, thereby finally obtaining the PAN matrix first component with the water-insoluble second component interpenetrated therein.

3. A composite polymeric composition comprising a polyacrylonitrile (PAN) polymer matrix first component, wherein the PAN polymer contains at least about 50% acrylonitrile units, and a substantially water-insoluble second component penetrating the PAN matrix, which second component is incapable of dissolving the PAN matrix; said composite polymeric material being the product of dissolving the PAN polymer in a water-miscible solvent which is capable of dissolving the PAN polymer but incapable of reacting chemically with the PAN polymer under the dissolution conditions, then coagulating the PAN polymer from the solution by adding a coagulating fluid to thereby obtain coagulated PAN matrix, then displacing the coagulating fluid in the PAN matrix first component with the water-insoluble second component by means of treating the coagulated PAN matrix with a series of decreasingly polar liquids, each liquid in the series miscible with the previous more polar liquid, thereby finally obtaining the PAN matrix first component with the water-insoluble second component interpenetrated therein.

4. A composite polymeric composition comprising a polyacrylonitrile (PAN) polymer matrix first component, wherein the PAN polymer contains at least about 50% acrylonitrile units, and a substantially water-insoluble second component penetrating the PAN matrix, which second component is incapable of dissolving the PAN matrix; said composite polymeric material being the product of dissolving the PAN polymer in a water-miscible solvent which is capable of dissolving the PAN polymer but incapable of reacting chemically with the PAN polymer under the dissolution conditions, then coagulating the PAN polymer from the solution by adding water to thereby obtain PAN aquagel, then displacing the water in the PAN aquagel matrix with the water-insoluble second component by means of treating the PAN aquagel with a series of decreasingly polar liquids, each liquid in the series miscible with the previous more polar liquid, thereby finally obtaining the PAN matrix first component with the water-insoluble second component interpenetrated therein.

5. The composite polymeric compositions of claim 1, 2, 3, or 4, wherein said water-insoluble second component comprises a water-immiscible, non-polar, organic liquid capable of plasticizing said PAN polymer first component.

6. The composite polymeric compositions of claim 1, 2, 3, or 4, wherein said water-insoluble second component is selected from the group consisting of disinfectants, pesticides, feromones, hormones, perfumes, fungicides, drugs, and mixtures thereof.

7. The composite polymeric compositions of claim 1, 2, 3, or 4, wherein said water-insoluble second component comprises a dye.

8. The composite polymeric compositions of claim 1, 2, 3, or 4, wherein said water-insoluble second component comprises a polymer.

9. The composite polymeric compositions of claim 6, wherein said second component polymer is cross-linked.

10. The composite polymeric compositions of claim 6, wherein said second-component polymer is water-swellable.

11. The composite polymeric composition of claim 1, 2, 3, or 4, wherein said polyacrylonitrile matrix first component is biaxially oriented.

12. The composite polymeric compositions of claim 1, 2, 3, or 4, wherein said polyacrylonitrile matrix first component is monoaxially oriented.

13. The composite polymeric compositions of claim 1, 2, 3, or 4, wherein said polyacrylonitrile matrix first component forms between 10% and 90% by volume of said composite polymeric composition.

14. The composite polymeric compositions of claim 1, 2, 3, or 4, wherein said polyacrylonitrile matrix first component forms between 20% and 60% by volume of said composite polymeric composition.

15. The composite polymeric compositions of claim 1, 2, 3, or 4, further comprising a surface layer whose chemical composition differs from the chemical composition of said PAN polymer of the first component.

16. A method for producing a composite polymeric composition, comprising:

a) dissolving a polyacrylonitrile (PAN) polymer in a water-miscible solvent, wherein the PAN polymer contains about at least 80% acrylonitrile units and wherein the water-miscible solvent is incapable of reacting chemically with the PAN polymer under the dissolution conditions;

b) coagulating PAN polymer from the solution obtained in step (a) by adding a coagulating fluid, thereby obtaining coagulated PAN polymer matrix with coagulating fluid interpenetrated therein; and,

c) displacing the coagulating fluid in the coagulated PAN matrix obtained in step (b) with a water-insoluble component by means of treating the coagulated PAN matrix obtained in step (b) with a series of less polar liquids, wherein each liquid in the series is miscible with the previous more polar liquid, thereby finally obtaining a PAN matrix component with a water-insoluble component interpenetrated therein.

17. A method for producing a composite polymeric composition, comprising:

a) dissolving a polyacrylonitrile (PAN) polymer in a water-miscible solvent, wherein the PAN polymer contains about at least 80% acrylonitrile units and wherein the water-miscible solvent is incapable of reacting chemically with the PAN polymer under the dissolution conditions;

b) coagulating PAN polymer from the solution obtained in step (a) by adding water, thereby obtaining PAN aquagel with water interpenetrated therein; and,

c) displacing the water in the PAN aquagel obtained in step (b) with a water-insoluble component by means of treating the PAN aquagel obtained in step (b) with a series of less polar liquids, wherein each liquid in the series is miscible with the previous more polar liquid, thereby finally obtaining a PAN matrix component with a water-insoluble component interpenetrated therein.

18. The method of claim 16 or 17, wherein the PAN polymer contains about at least 50% acrylonitrile units.